# EUROPÄISCHE PATENTANMELDUNG

(11) **EP 1 920 997 A2**
(43) Veröffentlichungstag der Anmeldung: **14.05.2008**
(21) Anmeldenummer: 07018407.2
(22) Anmeldetag: 19.09.2007
(51) Int. Cl.: B62D 25/16

(54) **Aufgedoppelte Radhausschale und Herstellungsverfahren dessen Vlieshalbzeugs**

(30) Priorität: 09.11.2006 DE 102006052883
(71) Anmelder: Röchling Automotive AG & Co. KG, 68165 Mannheim (DE)
(72) Erfinder: Orth, Arno, 67580 Hamm (DE); Wirth, Reinhard, 76571 Gaggenau (DE)
(74) Vertreter: Trossin, Hans-Jürgen

(57) **Zusammenfassung**

Ein Verfahren zur Herstellung einer Radhausschale (20) für Fahrzeuge umfasst:
- Bereitstellen einer Grundvlieslage (10) mit im Wesentlichen konstanter Materialdicke (D),
- abschnittsweises Verdicken der Grundvlieslage (10) zu einem Vlieshalbzeug (34) dessen Materialdicke sich längs wenigstens einer zu seiner Dickenrichtung orthogonalen Erstreckungsrichtung ändert sowie
- Umformen des Vlieshalbzeugs (34) zu der Radhausschale (20).

## Beschreibung

Die Erfindung betrifft die Herstellung einer Radhausschale für Fahrzeuge sowie eine Radhausschale mit einem in einer Thermoplastmatrix eingebetteten Fasergewirr.

Radhausschalen dienen dazu, einerseits Radhausbereiche eines Fahrzeugs vor Beschädigungen, wie beispielsweise vor Steinschlag, zu schützen und andererseits in Hinblick auf eine Verbesserung des Fahrkomforts in den Radhäusern auftretende Fahrgeräusche zu dämpfen. Radhausschalen sind in der Regel aus Kunststoff hergestellt, beispielsweise durch Spritzgießen oder durch Warmumformung von Vlieswerkstoffen. Üblicherweise wird bei der Herstellung von letzteren von einem einlagigen, flächigen Vlieszuschnitt, auch als Vlieshalbzeug bezeichnet, mit im Wesentlichen konstanter Materialdicke ausgegangen, das nach Klammerung seiner Kanten einer Warmumformung unterzogen wird. Man erhält somit einen Radhausschalenrohling, dessen überstehende Randabschnitte noch in einem nachfolgenden Arbeitsschritt entfernt werden.

Die so auf Grundlage eines einlagigen, flächigen Vlieszuschnitts hergestellte Radhausschale weist an ihren Stellen mit hohem Umformungsgrad, wie beispielsweise Rundungen, Kanten, usw., kleinere Materialdicken auf als an Stellen mit geringem Umformungsgrad. Damit die kleinste Materialdicke an Stellen der Radhausschale mit dem größten Umformungsgrad nicht eine vorbestimmte Mindestmaterialdicke unterschreitet, die zur Sicherstellung der Stabilität dieser Stellen wenigstens erforderlich ist, ist ein Vliesmaterial mit ausreichender Materialdicke bzw. Flächenmasse zu wählen. Dies hat zum Nachteil, dass jene wenigen Stellen mit dem größten Umformungsgrad die kleinstmögliche Flächenmasse des Vlieszuschnitts bestimmen, so dass in der Folge Stellen mit kleinerem Umformungsgrad eine verglichen mit der für die lokale Stabilität benötigten Materialdicke überdimensionierte Materialdicke aufweisen. Somit wird bei auf Vliesbasis hergestellten Radhausschalen ein unnötiger Materialaufwand betrieben, was zu unerwünscht hohen Kosten der Herstellung der Radhausschale führt.

Es ist daher Aufgabe der vorliegenden Erfindung, die Herstellung einer gattungsgemäßen Radhausschale derart weiterzubilden, dass eine Radhausschale mit gleichmäßigerer Wandstärke erhalten werden kann als bisher. Dies würde weiter ermöglichen, die Kosten zu deren Herstellung zu senken.

Erfindungsgemäß wird diese Aufgabe durch ein Verfahren zur Herstellung einer Radhausschale gelöst, welches umfasst:
- Bereitstellen einer Grundvlieslage mit im Wesentlichen konstanter Materialdicke,
- abschnittsweises Verdicken der Grundvlieslage zu einem Vlieshalbzeug, dessen Materialdicke sich längs wenigstens einer zu seiner Dickenrichtung orthogonalen Erstreckungsrichtung ändert, sowie
- Umformen des Vlieshalbzeugs zu der Radhausschale.

Mittels eines derartigen Verfahrens kann an der fertigen Radhausschale auf einfache Art und Weise eine homogenere Verteilung der Flächenmasse bzw. Materialdicke über die Radhausschale erreicht werden. Bei diesem Verfahren können nämlich Unterschiede zwischen Flächenmassen an Stellen unterschiedlichen Umformungsgrads dadurch vermieden oder zumindest reduziert werden, dass vor dem Umformen des Vlieshalbzeugs vorbestimmte Stellen der Grundvlieslage, die Stellen mit großem Umformungsgrad der Radhausschale entsprechen, gezielt verdickt werden. Das so entstandene Vlieshalbzeug ist dann Grundlage dafür, dass an der fertigen Radhausschale eine gleichmäßigere Materialdickenverteilung verwirklicht werden kann als dies bisher im Stand der Technik möglich war.

Das erfindungsgemäße Verfahren ermöglicht eine Materialeinsparung in vorteilhafter Weise insbesondere dann, wenn im Wesentlichen nur jene Bereiche der Grundvlieslage verdickt werden, die bei der Umformung besonders stark verformt werden und deshalb während des Umformens besonders starke Kräfte lokal auf sie wirken.

Zusätzlich oder alternativ zur Materialeinsparung kann das erfindungsgemäße Verfahren auch dazu verwendet werden, die fertige Radhausschale mit verstärkten Bereichen auszubilden, indem man die Grundvlieslage in Bereichen verdickt, die im betriebsmäßigen Zustand der aus der verdickten Grundvlieslage hervorgehenden Radhausschale besonderen Belastungen ausgesetzt sind. Eine derartige Verstärkung kann bedeuten, dass die fertige Radhausschale in den gewünschten Bereichen eine höhere Faserdichte aufweist als in anderen, weniger belasteten Bereichen.

Das abschnittsweise Verdicken kann grundsätzlich dadurch erreicht werden, dass Fasern aus Kunststoff, bevorzugt aus Thermoplast, mit dem Fasergewirr der Grundvlieslage verbunden werden. Zur Erzielung besonders hoher Festigkeiten ist die Verwendung von Fasern denkbar, die kein thermoplastisches Kunststoffmaterial umfassen, oder von Fasern, die ein anderes Material als Kunststoff umfassen. Derartige Fasern können thermoplastischen Fasern beigemischt sein, um die Warmumformbarkeit des Vlieses zu gewährleisten.

Die zur Verdickung der Grundvlieslage verwendeten Fasern können der Grundvlieslage lose oder als Fasergewirrbäusche zugeführt werden.

Um einen möglichst einfachen Produktionsprozess verbunden mit geringen Kosten realisieren zu können, ist jedoch bevorzugt, dass das abschnittsweise Verdicken der Grundvlieslage folgende Arbeitsschritte umfasst:
- Vorsehen einer Zusatzvlieslage mit kleinerer Grundfläche als jene der Grundvlieslage auf der Grundvlieslage sowie
- Verbinden von Zusatzvlieslage und Grundvlieslage zu dem Vlieshalbzeug.

Hierbei kann das Vorsehen der Zusatzvlieslage auf der Grundvlieslage bedeuten, dass die Zusatzvlieslage nur abschnittsweise auf der Grundvlieslage aufliegt, etwa, wenn sich Randbereiche der genannten Vlieslagen überlappen. Es ist jedoch bevorzugt, dass die Zusatzvlieslage mit ihrer ganzen Fläche auf der Grundvlieslage aufliegt. Zu diesem Zweck können beispielsweise Zusatzvlieslagen in Form von Bahnen auf einer ebenfalls bahnförmigen Grundvlieslage abgelegt werden, und umgekehrt. Bahnförmige Vlieslagen lassen sich besonders vorteilhaft von großen Vorratsrollen abrollen.

Um der Zusatzvlieslage ein gewünschtes Dickenprofil verleihen zu können, kann das erfindungsgemäße Verfahren zusätzlich den Verfahrensschritt eines abschnittsweisen Verdickens der Zusatzvlieslage umfassen, so dass sich ihre Materialdicke längs wenigstens einer zu ihrer Dickenrichtung orthogonalen Erstreckungsrichtung ändert. Dabei kann die Zusatzvlieslage vor, gleichzeitig mit oder nach ihrem Vorsehen an der Grundvlieslage verdickt werden.

In einer weiteren Ausführungsform der Erfindung kann ein gewünschtes Dickenprofil des Vlieshalbzeugs dadurch erreicht werden, dass das Vlieshalbzeug abschnittsweise verdickt wird. Vorzugsweise wird dabei eine Verstärkungsvlieslage auf dem Vlieshalbzeug vorgesehen und mit demselben verbunden. Der Schritt eines Vorsehens einer Verstärkungsvlieslage kann gegebenenfalls wiederholt durchgeführt werden. Die Radhausschale kann damit aus einem Vlieshalbzeug mit wenigstens drei miteinander in Verbindung stehenden Vlieslagen, nämlich der Grundvlieslage, wenigstens einer Zusatzvlieslage sowie wenigstens einer Verstärkungsvlieslage, gebildet werden.

Das abschnittsweise Verdicken, insbesondere das Verbinden zweier Vlieslagen, kann mittels gängiger Verfahren, wie beispielsweise Kalandrieren, Vermaschen, Übernähen oder Verwirbeln realisiert werden. Aus Gründen einer ausreichenden Verbindung von Vlieslagen bei der Produktion von Radhausschalen ist jedoch bevorzugt, dass das abschnittsweise Verdicken ein Vernadeln, bevorzugt mechanisches Vernadeln, umfasst. Dies soll jedoch nicht ausschließen, dass die Vlieslagen alternativ durch Vernadeln mittels flüssiger oder gasförmiger Hochdruckstrahlen verbunden und verfestigt werden können.

Um ausgehend von dem Vlieshalbzeug die Radhausschale zu formen, kann das Umformen des Vlieshalbzeugs mittels Pressformen ausgeführt werden. Hierzu wird das Vlieshalbzeug in eine der Radhausform entsprechenden Form gelegt, und mittels eines Stempels in die gewünschte Form gepresst.

Um die die Thermoplastmatrix der Radhausschale bildenden Fasern des Vlieshalbzeugs zum Schmelzen zu bringen, wird vorgeschlagen, dass vor dem Umformen des Vlieshalbzeugs ein Schritt des Erwärmens des Vlieshalbzeugs auf eine erhöhte Temperatur, vorzugsweise über die Erweichungstemperatur eines in dem Vlieshalbzeug enthaltenen Kunststoffmaterials durchgeführt wird. Das Erwärmen des Vlieshalbzeugs kann grundsätzlich während des Umformens mittels einer in der Form integrierten Heizung erfolgen. Dies gestattet es zwar, zur Senkung der Produktionskosten zwei Arbeitsschritte zu einem zusammenzufassen, ist jedoch aufgrund eines erhöhten Energieaufwands nicht bevorzugt. Bevorzugt wird das Vlieshalbzeug zuerst erwärmt, etwa durch Strahler oder Kontaktheizung, bevor es dem Pressformen zugeführt wird. Dabei kann durch Verwendung von Formen mit niedrigerer Temperatur als jene des Vlieshalbzeugs oder sogar von gekühltem Formen der Übergang in den formfesten Zustand des zu einer Radhausschale geformten Vlieshalbzeugs beschleunigt werden.

Für die Herstellung der Radhausschale mit dem Verfahren der vorliegenden Anmeldung spielt das oben beschriebene Vlieshalbzeug eine entscheidende Rolle. Deshalb wird unabhängiger Schutz für ein Vlieshalbzeug zur Herstellung einer erfindungsgemäßen Radhausschale ersucht, wobei sich die Materialdicke des Vlieshalbzeugs längs wenigstens einer zu seiner Dickenrichtung orthogonalen Erstreckungsrichtung ändert. Ein derartiges Vlieshalbzeug ist Grundlage dafür, dass eine Radhausschale mit einer möglichst gleichmäßigen Materialdicke verwirklicht werden kann.

Das Vlieshalbzeug umfasst bevorzugt ein Fasergewirr mit wenigstens zwei Faseranteilen, von welchen wenigstens einer aus thermoplastischem Material gebildet ist. Der thermoplastische Faseranteil kann dann zur Bildung einer Thermoplastmatrix verwendet werden, der hierfür zum Schmelzen gebracht werden kann. In der Thermoplastmatrix der Radhausschale ist dann der wenigstens eine verbleibende Faseranteil eingebettet, der so die mechanische Festigkeit der Radhausschale gewährleistet.

Dieser wenigstens eine in der Thermoplastmatrix eingebettete Faseranteil kann aus einem beliebigen Material gebildet sein, welches eine höhere Schmelztemperatur oder Versagenstemperatur aufweist als der zur Thermoplastmatrix aufgeschmolzene Faseranteil. Daher kann daran gedacht sein, dass wenigstens zwei Faseranteile aus je einem thermoplastischem Material gebildet sind, deren Schmelztemperaturen sich voneinander unterscheiden. Es ergibt sich demnach die Möglichkeit, dass bei der Herstellung der Radhausschale durch Erwärmen und Umformen des Vlieshalbzeugs die Schmelztemperatur des wenigstens einen die Thermoplastmatrix bildenden Faseranteils gerade überschritten, jedoch jene des wenigstens einen anderen Faseranteils unerreicht bleibt. Folglich wird die Thermoplastmatrix durch Schmelzen des ersten Faseranteils erhalten, während der andere Faseranteil das Fasergewirr der Radhausschale bildet. Durch Verwendung von Thermoplasten mit unterschiedlicher Schmelztemperatur kann auf Grund der Verwandtschaft der verwendeten Werkstoffe durch Diffusionsvorgänge eine besonders gute Bindung zwischen den verbleibenden Fasern und der Thermoplastmatrix erwartet werden.

Schließlich wird unabhängiger Schutz für die Verwendung eines oben bezeichneten Vlieshalbzeugs zur Herstellung einer Radhausschale nachgesucht.

Durch das erfindungsgemäße Herstellungsverfahren wird eine Radhausschale für Fahrzeuge mit einem in eine Thermoplastmatrix eingebetteten Fasergewirr erhalten, die eine im Wesentlichen konstante Flächenmasse aufweist derart, dass sich Flächenmassen von im Wesentlichen ebenen kreisförmigen Proben mit einer Grundfläche von wenigstens 10 cm² unabhängig von ihrem Entnahmeort an der Radhausschale um nicht mehr als 25-30 % bezogen auf die Probe mit der höheren Flächenmasse unterscheiden. Mit einer solchen Radhausschale wird ermöglicht, dass der für ihre Herstellung erforderliche Materialaufwand reduziert wird, ohne dass dies zu einer Beeinträchtigung der Funktion sowie Qualität derselben führt. Somit kann auf vorteilhafte Weise nicht nur eine Senkung der Herstellungskosten, sondern auch eine Reduzierung des Gewichts der Radhausschale erreicht werden.

Zur einfachen Bestimmbarkeit der Grundfläche einer aus einer Radhausschale entnommenen Probe sollte die Probe nach Möglichkeit eben sein. Sofern die Probe an einer stark gekrümmten Stelle der Radhausschale entnommen ist, kann sie durch Pressen eingeebnet werden. Die Probe sollte weiterhin kreisförmig sein, um entartete Probengeometrien auszuschließen, die nicht geeignet sind, eine lokale Flächenmasse der Radhausschale aufzuzeigen. Bei der Kreisförmigkeit der Probe kommt es auf die Kreisförmigkeit im ebenen Zustand der Probe an. Die entnommenen Proben sollten im ebenen Zustand im Wesentlichen orthogonal zur Grundfläche verlaufende Schnittkanten aufweisen, so dass die Probenvorderseite und die Probenrückseite im Wesentlichen die gleiche Grundfläche aufweisen. Im Zweifel soll die Grundfläche der von der Radhausschalenaußenseite stammenden Probenseite herangezogen werden. Falls die Probe nach dem Einebnen nicht kreisförmig ist, kann sie durch geeignete Verfahren nachträglich in Kreisform gebracht werden.

Die Entnahme kann mittels eines Stanzverfahrens, Sägeverfahrens mit einer Lochsäge, Bohrens mit einem Kernbohrer oder anderen ähnlichen Verfahren durchgeführt werden.

Das erfindungsgemäße Verfahren sowie die erfindungsgemäße Radhausschale werden im Folgenden anhand der beigefügten Figuren an einem Ausführungsbeispiel näher erläutert. Es stellt dar:
- Fig. 1: die Ergebnisse einzelner Verfahrensschritte des erfindungsgemäßen Verfahrens sowie eine erfindungsgemäße Radhausschale; und
- Fig.2: ein kreisförmiges, aus der erfindungsgemäßen Radhausschale entnommenes Probenstück.

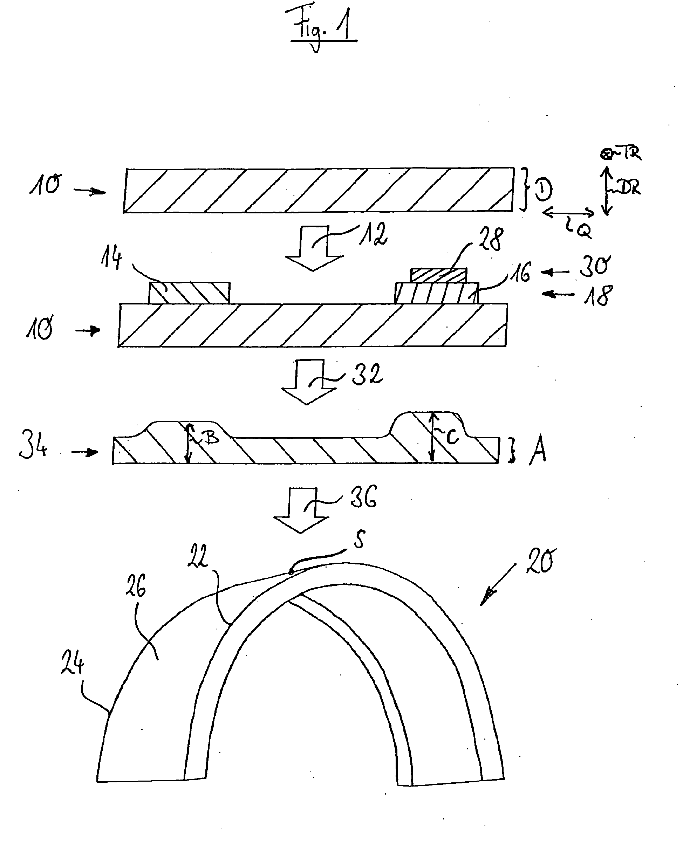

Im obersten Teil der Fig. 1 ist ein Querschnitt einer Grundvlieslage 10 gezeigt, welche bevorzugt als Bahn mit einer im Wesentlichen konstanten Materialdicke D von einer Transportrolle (nicht dargestellt) abgerollt und beispielsweise auf einem Transportband (nicht gezeigt) in einer zur Dickenrichtung DR der Grundvlieslage orthogonalen Transportrichtung TR bewegt wird.

Aus den in Fig. 1 gezeigten Vlieslagen bzw. dem Vlieshalbzeug 34 werden zwei Radhausschalen gefertigt. Aus Gründen einer einfacheren Erläuterung des Produktionsvorgangs ist in Fig. 1 lediglich eine Radhausschale 20 der zwei aus dem Vlieshalbzeug 34 erzeugten Radhausschalen dargestellt.

Die Grundvlieslage 10 umfasst bevorzugt zwei verschiedene Arten von thermoplastischen Fasern, von denen eine erste Faserart eine Schmelztemperatur T1 und eine zweite Faserart eine bezogen auf T1 höhere Schmelztemperatur T2 aufweist.

In einem Schritt 12 werden zur abschnittsweisen Verdickung der Grundvlieslage 10 an denjenigen Stellen, die in der späteren Warmumformung zur Bildung von Radhausschalen 20 die stärkste Umformung erfahren bzw. den größten Umformungsgrad aufweisen, Bahnen 14, 16 einer Zusatzvlieslage 18 auf der Grundvlieslage 10 abgelegt. Auf diese Weise wird eine gewünschte Stabilität der diesen Stellen entsprechenden Stellen der fertig gebildeten Radhausschale 20, wie im vorliegenden Fall der Scheitelpunkt S der Radhausmantelfläche 26, sichergestellt. Um dagegen die Stabilität eines Bereichs der Radhausschale 20 mit geringerem Umformungsgrad zu gewährleisten, wie beispielsweise die mit 22 und 24 gekennzeichneten Kanten bzw. Randbereiche der Umfangsfläche, ist keine Verdickung von diesem Bereich entsprechenden Stellen der Grundvlieslage 10 erforderlich. Folglich kann an diesen Stellen gegenüber dem Stand der Technik Vliesmaterial eingespart werden.

Wie in Fig. 1 dargestellt ist, ist zur zusätzlichen Verdickung der Grundvlieslage 10 auf der Bahn 16 der Zusatzvlieslage 18 eine Bahn 28 einer Verstärkungsvlieslage 30 abgelegt. Gemäß dieser Ausführungsform umfassen die Bahnen 14, 16, 28 ebenfalls die oben beschriebenen Fasern der Grundvlieslage.

Als nächstes werden in einem Schritt 32 zur Herstellung eines Vlieshalbzeugs 34 mit einer minimalen Materialdicke A, einer mittleren Materialdicke B und einer größten Materialdicke C die Bahnen 14, 16, 28 sowie die Grundvlieslage 10 miteinander verbunden. Das Vlieshalbzeug 34 weist somit längs seiner zur Dickenrichtung DR orthogonalen Querrichtung Q eine sich ändernde Materialdicke auf. Gemäß dieser Ausführungsform wird das Vlieshalbzeug 34 bevorzugt mittels mechanischer Vernadelung auf Grundlage der mit den Bahnen 14, 16, 26 belegten Grundvlieslage 10 erzeugt, alternativ können jedoch auch andere Verfahren wie Kalandrieren, Vernähen dazu herangezogen werden. Vernadeln bewirkt neben einem Verbinden der Bahnen 14, 16, 26 mit der Grundvlieslage 10 ein Verfestigen derselben, verbunden mit einer Reduzierung ihrer Materialdicke, beispielsweise von D auf A. Das Vlieshalbzeug 34 kann in den nicht durch weitere Vlieslagen 18 und 30 verstärkten Bereichen jedoch auch die ursprüngliche Materialdicke D aufweisen.

Zur Weiterverarbeitung des Vlieshalbzeugs 34 wird in einem Arbeitsschritt 36 dieses in eine nach Maßgabe der Form der Radhausschale 20 gebildeten Pressform (nicht dargestellt) gelegt und durch einen der Pressform zugeordneten Stempel zu der Radhausschale 20 umgeformt. Dazu wird das Vlieshalbzeug 34 über die Temperatur T1 hinaus, bevorzugt vor Einlegen in die Pressform, erwärmt, so dass die Fasern der ersten Faserart schmelzen, um sich wie beabsichtigt zu einer Thermoplastmatrix der Radhausschale 20 umzuwandeln. Die beim Erwärmen auftretende Temperatur erreicht jedoch nicht die Schmelztemperatur T2 der Fasern der zweiten Faserart, die im Zustand der fertigen Radhausschale 20 folglich das in die Thermoplastmatrix eingebettete Fasergewirr bilden.

Bei dem Fig. 1 gezeigten Beispiel werden aus dem Vlieshalbzeug 34, wie oben gesagt, zwei Radhausschalen 20 erzeugt, wobei der Bereich mittlerer Materialdicke B des Vlieshalbzeugs 34 der einen Radhausschale und der Bereich größter Materialdicke C der jeweils anderen Radhausschale zugeordnet ist. Dies kann beispielsweise darauf zurückzuführen sein, dass die beiden Radhausschalen entweder unterschiedlich starke Umformungen am Scheitelpunkt S ihrer Radhausmantelfläche 26 aufweisen oder unterschiedlich großen Belastungen im Betrieb ausgesetzt sind.

Mit dem oben gezeigten Beispiel soll veranschaulicht werden, dass die Bereiche unterschiedlicher Materialdicke des Vlieshalbzeugs 34 mit unterschiedlicher Materialstärke ausgebildet sein können. Im Regelfall wird man jedoch versuchen, aus ein und demselben Vlieshalbzeug 34 zwei gleichartige Radhausschalen 20 herzustellen, so dass dann die Materialstärken B und C des Vlieshalbzeugs 34 im Wesentlichen identisch sein werden.

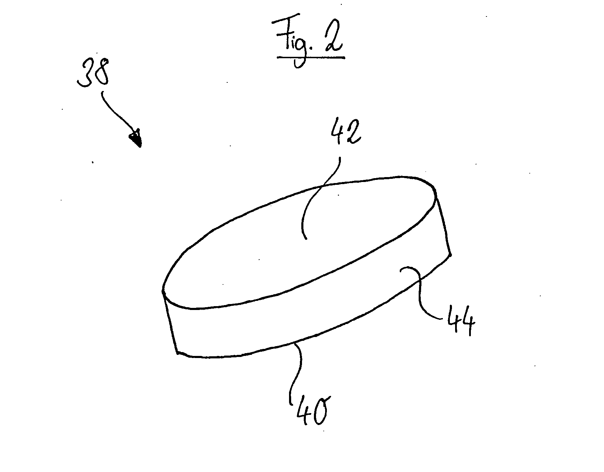

Die so erhaltenen Radhausschalen 20 weisen eine im Wesentlichen konstante Flächenmasse auf, deren Nachweis auf Grundlage von aus der Radhausschale an verschiedenen Orten entnommener Proben erfolgen kann. Eine solche Probe ist in Fig. 2 dargestellt und allgemein mit 38 bezeichnet. Diese weist eine Unterseite 40, Oberseite 42 sowie eine Umfangsfläche 44 auf. Im Sinne der Erfindung ist eine Grundfläche der Probe 38 gleich dem Flächeninhalt der Oberseite 42 der Probe 38, die vor Entnahme der Probe 38 Teil der Außenfläche der Radhausschale 20 war. Die zur Unterseite 40 und zur Oberseite 42 im Wesentlichen orthogonale Umfangsfläche 44, welche erst durch Entnahme der Probe entsteht, wird bei Berechnung der Grundfläche der Probe 38 nicht berücksichtigt.

## Patentansprüche

1. Verfahren zur Herstellung einer Radhausschale (20) für Fahrzeuge, umfassend:
- Bereitstellen einer Grundvlieslage (10) mit im Wesentlichen konstanter Materialdicke (D),
- abschnittsweises Verdicken der Grundvlieslage (10) zu einem Vlieshalbzeug (34) dessen Materialdicke sich längs wenigstens einer zu seiner Dickenrichtung (DR) orthogonalen Erstreckungsrichtung (Q) ändert sowie
- Umformen des Vlieshalbzeugs (34) zu der Radhausschale (20).

2. Verfahren zur Herstellung einer Radhausschale (20) nach Anspruch 1,
**dadurch gekennzeichnet, dass** das abschnittsweise Verdicken der Grundvlieslage (10) umfasst:
- Vorsehen einer Zusatzvlieslage (18) mit kleinerer Grundfläche als jene der Grundvlieslage (10) auf der Grundvlieslage (10) sowie
- Verbinden von Zusatzvlieslage (18) und Grundvlieslage (10) zu dem Vlieshalbzeug (34).

3. Verfahren zur Herstellung einer Radhausschale (20) nach Anspruch 2,
**dadurch gekennzeichnet, dass** das Verfahren ein abschnittsweises Verdicken der Zusatzvlieslage (18) umfasst, sodass sich ihre Materialdicke längs wenigstens einer zu ihrer Dickenrichtung (DR) orthogonalen Erstreckungsrichtung (Q) ändert.

4. Verfahren zur Herstellung einer Radhausschale (20) nach einem der vorhergehenden Ansprüche,
**dadurch gekennzeichnet, dass** das Verfahren ein abschnittsweises Verdicken des Vlieshalbzeugs (34) umfasst, bei dem vorzugsweise eine Verstärkungsvlieslage (30) auf dem Vlieshalbzeug (34) vorgesehen und mit demselben verbunden wird.

5. Verfahren zur Herstellung einer Radhausschale (20) nach einem der vorhergehenden Ansprüche,
**dadurch gekennzeichnet, dass** das abschnittsweise Verdicken, insbesondere das Verbinden zweier Vlieslagen (10), (18), (34), ein Vernadeln, bevorzugt mechanisches Vernadeln, umfasst.

6. Verfahren zur Herstellung einer Radhausschale (20) nach einem der vorhergehenden Ansprüche,
**dadurch gekennzeichnet, dass** das Umformen des Vlieshalbzeugs (34) mittels Pressformen ausgeführt wird.

7. Verfahren zur Herstellung einer Radhausschale (20) nach einem der vorhergehenden Ansprüche,
**dadurch gekennzeichnet, dass** vor dem Umformen des Vlieshalbzeugs (34) ein Schritt des Erwärmens des Vlieshalbzeugs (34) auf eine erhöhte Temperatur, vorzugsweise über die Erweichungstemperatur eines in dem Vlieshalbzeug (34) enthaltenen Kunststoffmaterials durchgeführt wird.

8. Vlieshalbzeug (34) zur Herstellung einer Radhausschale (20), wobei sich die Materialdicke (A, B, C) des Vlieshalbzeugs (34) längs wenigstens einer zu seiner Dickenrichtung (DR) orthogonalen Erstreckungsrichtung (Q) ändert.

9. Vlieshalbzeug (34) nach Anspruch 8,
**dadurch gekennzeichnet, dass** es ein Fasergewirr umfasst mit wenigstens zwei Faseranteilen, von welchen wenigstens einer aus thermoplastischem Material gebildet ist.

10. Vlieshalbzeug (34) nach Anspruch 9,
**dadurch gekennzeichnet, dass** beide der wenigstens zwei Faseranteile aus je einem thermoplastischem Material gebildet ist, deren Schmelztemperaturen sich voneinander unterscheiden.

11. Verwendung eines Vlieshalbzeugs (34) gemäß einem der Ansprüche 8 bis 10 zur Herstellung einer Radhausschale (20).

12. Radhausschale (20) für Fahrzeuge mit einem in eine Thermoplastmatrix eingebetteten Fasergewirr, **dadurch gekennzeichnet, dass** sie eine im Wesentlichen konstante Flächenmasse aufweist derart, dass sich Flächenmassen von im Wesentlichen ebenen kreisförmigen Proben (38) mit einer Grundfläche von wenigstens 10 cm² unabhängig von ihrem Entnahmeort an der Radhausschale (20) um nicht mehr als 25-30% bezogen auf die Probe (38) mit der höheren Flächenmasse unterscheiden.
